# EUROPÄISCHE PATENTSCHRIFT

(11) **EP 0 491 674 B1**
(45) Veröffentlichungstag und Bekanntmachung des Hinweises auf die Patenterteilung: **12.07.1995**
(21) Anmeldenummer: 91890305.5
(22) Anmeldetag: 13.12.1991
(51) Int. Cl.: H02B 1/052, H01R 9/26

(54) **Schnellbefestigungseinrichtung**
Snap-lock device
Dispositif de fixation rapide

(30) Priorität: 17.12.1990 AT 2565/90
(43) Veröffentlichungstag der Anmeldung: 24.06.1992
(73) Patentinhaber: EH-Schrack Energietechnik GmbH, A-1235 Wien (AT)
(72) Erfinder: Gorfer, Erich, A-1110 Wien (AT)
(74) Vertreter: Gibler, Ferdinand, Dipl.Ing. Dr. techn.

(56) Entgegenhaltungen:
- EP-A- 0 168 714
- DE-U- 7 916 477
- FR-A- 1 331 564
- FR-A- 2 388 154
- FR-A- 2 652 205
- GB-A- 2 216 177

## Beschreibung

Die Erfindung bezieht sich auf eine Schnellbefestigungseinrichtung für elektrische Geräte zur Anbringung auf einer Tragschiene, bei dem ein federnder Riegel vorgesehen ist, der in einer seitlichen Führung des zu befestigenden Gerätes verschiebbar ist, wobei Raststellungen für den Riegel vorgesehen sind, der eine rahmenartige, um eine Längsachse symmetrische Gestalt aufweist, und dessen Längsseiten mindestens je einen konvexen und einen konkaven Abschnitt aufweisen.

Eine solche Schnellbefestigungseinrichtung wurde z.B. durch DE-GM 79 16 477 bekannt. Bei dieser Schnellbefestigungseinrichtung ist ein im wesentlichen U-förmiger Drahtbügel, dessen Schenkelenden nach innen gebogen sind und in einen Schnappteil eingreifen, sodaß sich ein rahmenartiger Riegel ergibt. Die beiden Schenkel des Drahtbügels sind um die Mittelachse symmetrisch mit einem konvexen und einem konkaven Abschnitt versehen. Diese konvexen Abschnitte wirken mit seitlichen Vertiefungen in den Führungen zusammen, in denen diese Abschnitte einrasten, wobei an jeder Seite der Führung je zwei seitliche Vertiefungen angeordnet sind. Es ergibt sich daher, daß der Riegel im bekannten Falle zwei Raststellungen aufweist, von denen die eine der Sperrstellung, in der der Steg des Drahtbügels eine Befestigungsschiene hintergreift und die andere einer Freigabestellung, in der das Gerät von der Befestigungsschiene abgenommen werden kann, entspricht.

Bei dieser Lösung ergibt sich jedoch der Nachteil, daß z.B. beim Montieren von Sicherungsautomaten diese entweder im an der Befestigungsschiene befestigten Zustand mit den elektrischen Leitungen verbunden werden, wobei sich, insbesondere bei beengten Platzverhältnissen, erhebliche Probleme ergeben, oder der Anschluß der elektrischen Leitungen im losen Zustand des Sicherungsautomaten erfolgt und dieser samt den angeschlossenen Leitungen auf die Befestigungsschiene aufgesetzt und durch Einschieben des Riegels fixiert werden. Dies ist jedoch, insbesondere beim Anschluß von Einzeldrähten oder der Sammelschiene mit erheblichen Schwierigkeiten verbunden.

Ziel der Erfindung ist es, diese Nachteile zu vermeiden und eine Schnellbefestigungseinrichtung der eingangs erwähnten Art vorzuschlagen bei dem eine einfache Montage des zu befestigenden Gerätes sichergestellt ist.

Erfindungsgemäß wird dies dadurch erreicht, daß jede Längsseite des rahmenartigen Riegels, mindestens drei aneinander anschließende, abwechselnd konvex-konkav-konvex verlaufende Abschnitte aufweist, die mit der seitlichen Führung jeweils für sich in einer ersten Stellung, der Verriegelungsstellung, in einer zweiten Stellung, in der das Gerät locker gehalten wird, und in einer dritten Stellung, in der das Gerät gelöst ist, verrastbar sind, und daß zumindest eine weitere Führung für den rahmenartigen Riegel vorgesehen ist.

Auf diese Weise ergeben sich drei Raststellungen. Die erste Raststellung bei völlig in das Gerät eingeschobenem Riegel entspricht der Verriegelungsstellung, in welcher das Gerät auf der Schiene aufgeschnappt ist.

In der zweiten, mittleren Raststellung, in welcher zumindest die konkaven längsseitigen Abschnitte des Riegels verrastet sind, ist das Gerät von der Schiene entklinkt und locker gehalten, sodaß das Gerät zur Erleichterung des Anschlusses der elektrischen Leitungen in einem gewissen Ausmaß bewegt werden kann, und die Leitungen leichter in die entsprechenden Klemmen eingeführt werden können, ohne daß deshalb die Verbindung zwischen dem Gerät und der Befestigungsschiene vollkommen gelöst wird.

In der nächsten dritten Raststellung, in welcher der andere konvexe längsseitige Abschnitt des Riegels verrastet ist, ist der Riegel so weit herausgezogen und somit die Schiene so weit freigegeben, daß das Gerät mitten aus einer bestehenden Verschienungsformation herausgehoben werden kann, und zwar ohne daß andere Verbindungen der Verschienungsformation oder der Geräte innerhalb derselben gelöst werden müssen.

In Weiterbildung der Erfindung kann so vorgegangen werden, daß in den seitlichen Führungen konkave Erweiterungen, vorzugsweise zu beiden Längsseiten jeweils eine Erweiterung, angeordnet sind, die den konvexen Abschnitten der Längsseiten des Riegels entsprechen und daß der konkave Abschnitt des Riegels eine Länge aufweist, die zumindest einer Teillänge, vorzugsweise der Gesamtlänge der seitlichen Führungen des zu befestigenden Gerätes entspricht. Hiedurch ist die Möglichkeit, eine besonders einfach ausgestaltete Führung zu schaffen, die gleichzeitig Führung für die konkaven und konvexen Abschnitte des Riegels ist, gegeben.

Eine besonders zuverlässige und sichere Führung eines derart verrastbaren Riegels kann dadurch erreicht werden, wenn in weiterer Ausgestaltung der Erfindung so vorgegangen wird, daß die weitere Führung durch einen, an einer Schmalseite des rahmenartigen Riegels, einen aus der Ebene des rahmenartigen Riegels herausragenden Ansatz umfaßt, der in eine als Führung dienende Nut des zu befestigenden Gerätes eingreift.

Dabei kann weiters vorgesehen sein, daß der aus der Ebene des rahmenartigen Riegels herausragende Ansatz im Querschnitt T-förmig ausgebildet ist und die Nut des zu befestigenden Gerätes ebenfalls T-förmig ausgebildet ist.

Dadurch wird eine besonders sichere Führung des Riegels sichergestellt, wobei auch bei aus relativ elastischen Kunststoffen hergestellten Riegeln ein Aufbiegen sicher vermieden wird.

Weiters kann vorgesehen sein, daß die eine Schmalseite des rahmenartigen Riegels im Querschnitt im wesentlichen dreieckig ausgebildet und zum Hintergreifen der Tragschiene vorgesehen ist.

Dies erleichtert ein Hintergreifen der Befestigungsschiene, die vorzugsweise durch eine hutprofilartige Schiene gebildet ist.

Bei einer erfindungsgemäßen Schnellbefestigungseinrichtung bei dem die Führungen des zu befestigenden Gerätes den rahmenartigen Riegel übergreifen, kann nach einem weiteren Merkmal der Erfindung vorgesehen sein, daß die im Querschnitt dreieckige Schmalseite des rahmenartigen Riegels einen aus seiner Ebene herausragenden Anschlag aufweist, der mit dem den Riegel übergreifenden Abschnitt der Führung zusammenwirkt und ein Herausziehen des Riegels verhindert.

Weiters kann vorgesehen sein, daß der Riegel in seiner einen Endstellung nur wenig über eine Kante des zu befestigenden Gerätes vorragt, wobei zwischen der Schmalseite des Riegels oder einer dazu parallel verlaufenden Strebe und der Kante des zu befestigenden Gerätes nur ein schmaler, ein Einschieben eines Werkzeuges ermöglichender Spalt vorhanden ist.

Auf diese Weise ist sichergestellt, daß der Riegel, wie in den einschlägigen Bestimmungen vorgesehen, nur mit einem Werkzeug von der Raststellung, in der das Gerät auf der Befestigungsschiene festgeklemmt ist, entfernt werden kann.

Die Erfindung wird nun anhand der Zeichnung näher erläutert.

Dabei zeigen:
Fig. 1 eine Ansicht des Gerätes von unten mit der erfindungsgemäßen Schnellbefestigungseinrichtung, deren seitliche Riegelführungen im Schnitt dargestellt sind,
Fig. 2 zum Teil eine Gerätehälfte in Vorderansicht mit dem Riegel der Schnellbefestigung im Schnitt längs Linie II-II der Fig. 1, und
Fig. 3 einen Schnitt längs Linie III-III der Fig. 2, jedoch durch beide Gerätehälften.

Das zu befestigende Gerät 1 ist mit seitlichen Führungen 2 versehen, zwischen denen ein Riegel 3 geführt ist.

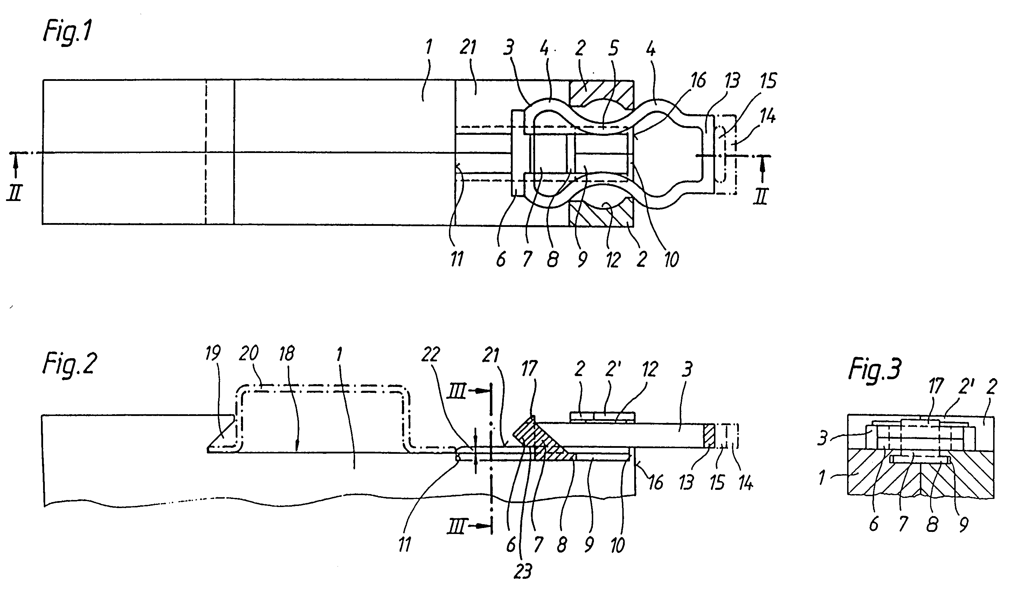

Dieser Riegel weist eine rahmenartige Form auf und ist aus einem federnden Material, wie z.B. Kunststoff hergestellt. Dabei weisen die Längsseiten des Riegels 3 je zwei konvexe Abschnitte 4 und einen zwischen diesen angeordneten konkaven Abschnitt 5 auf. Dabei ist an einer Schmalseite 6, die, wie die Fig. 2 zeigt, einen im wesentlichen dreieckigen Querschnitt aufweist, ein zur Ebene des Riegels 3 schräger Ansatz 7 angeformt, der mit einem zu beiden Seiten dieses Ansatzes 7 vorragenden Fuß 8 versehen ist, sodaß ein insgesamt T-förmiger Querschnitt vorliegt.

Wie Fig. 3 zeigt, ist dieser Fuß in einer im Querschnitt T-förmigen Nut 9 des zu befestigenden Gerätes 1 geführt, die an ihren beiden Enden, wie aus der Fig. 2 zu ersehen ist, durch eine Rippe 10, bzw. einen Ansatz 11 abgeschlossen. Der Riegel ist daher bei der Montage zwischen den beiden Gehäusehälften des Gerätes 1 einzulegen und kann in der Nut 9 verschoben werden, wobei durch den Fuß 8 ein Aufbiegen des Riegels 3 verhindert ist. Die Teile 7, 8 bzw. 9 können alternativ auch schwalbenschwanzförmig profiliert sein.

Die Länge der Führungen 2 entspricht der Länge der konkaven Bereiche 5 der Längsseiten des rahmenartigen Riegels 3. Weiters sind die beiden Führungen 2 mit konkaven Erweiterungen 12 versehen, die im wesentlichen den konvexen Bereichen 4 der Längsseiten des Riegels 3 entsprechen und für diese Rastaufnahmen bilden.

Die Konfiguration gemäß Fig. 1 läßt erkennen, daß der Riegel 3 bei einer Stellung, in der der Riegel 3 mit seinen der Schmalseite 13 nahen Bereichen 4 in den Erweiterungen 12 liegt, nur wenig über die Kante 16 des zu befestigenden Gerätes 1 hinaus, sodaß der Riegel mit der bloßen Hand kaum erfaßt werden kann und daher nur mit einem in den Freiraum zwischen 16 und 13 einsetzbaren Werkzeug herausgezogen werden kann.

Der Riegel 3 kann - wie strichpunktiert dargestellt - an der zweiten Schmalseite 13 einen zu dieser parallel verlaufenden Steg 14 aufweisen, zwischen denen ein Schlitz 15 vorhanden ist, der das Einführen eines Werkzeuges, z.B. eines Schraubendrehers ermöglicht, um den Riegel 3 mühelos verschieben zu können.

An der Schmalseite 6 ist weiters ein von der Nut 9 sich weg erstreckender Anschlag 17 angeordnet, der mit dem den Riegel 3 übergreifenden Bereich 2′ der Führungen 2 zusammenwirkt und ein Herausziehen des Riegels aus den Führungen 2 verhindert. Wie die Fig. 2 zeigt, weist das zu befestigende Gerät 1 einen Freiraum 18 mit einer Hinterschneidung 19 zur Aufnahme einer strichliert dargestellten Befestigungsschiene 20 auf. Die Basis 21 der Schnappbefestigung überragt - wie bei 22 angedeutet - die Grundfläche des Freiraumes 18. Die Tiefe der solcherart gebildeten Stufe entspricht vorzugsweise der Dicke des Schienenschenkels, sodaß die eingesetzte Schiene verdrehungssicher auf das Gerät aufgesetzt ist. Wird der Riegel 3 in seine Verriegelungsstellung geschoben, übergreift die Schmalseite 6 des Riegels 3 mit ihrer Kante 23 den Schienenschenkel, sodaß das Gerät an der Schiene 20 festgelegt ist.

## Patentansprüche

1. Schnellbefestigungseinrichtung für elektrische Geräte (1) zur Anbringung auf einer Tragschiene (20), bei dem ein federnder Riegel (3) vorgesehen ist, der in einer seitlichen Führung des zu befestigenden Gerätes verschiebbar ist, wobei Raststellungen für den Riegel vorgesehen sind, der eine rahmenartige, um eine Längsachse symmetrische Gestalt aufweist, und dessen Längsseiten mindestens je einen konvexen und einen konkaven Abschnitt aufweisen, **dadurch gekennzeichnet**, daß jede Längsseite des rahmenartigen Riegels (3), mindestens drei aneinander anschließende, abwechselnd konvex-konkavkonvex verlaufende Abschnitte (4, 5) aufweist, die mit der seitlichen Führung (2) jeweils für sich in einer ersten Stellung, der Verriegelungsstellung, in einer zweiten Stellung, in der das Gerät locker gehalten wird, und in einer dritten Stellung, in der das Gerät gelöst ist, verrastbar sind, und daß zumindest eine weitere Führung (9) für den rahmenartigen Riegel (3) vorgesehen ist.

2. Schnellbefestigungseinrichtung nach Anspruch 1, dadurch gekennzeichnet, daß in den seitlichen Führungen (2) konkave Erweiterungen (12), vorzugsweise zu beiden Längsseiten jeweils eine Erweiterung, angeordnet sind, die den konvexen Abschnitten (4) der Längsseiten des Riegels (3) entsprechen und daß der konkave Abschnitt (5) des Riegels (3) eine Länge aufweist, die zumindest einer Teillänge, vorzugsweise der Gesamtlänge, der seitlichen Führungen (2) des zu befestigenden Gerätes (1) entspricht.

3. Schnellbefestigungseinrichtung nach Anspruch 1 oder 2, dadurch gekennzeichnet, daß die weitere Führung durch einen, an einer Schmalseite (6) des rahmenartigen Riegels (3), einen aus der Ebene des rahmenartigen Riegels (3) herausragenden Ansatz (7) umfaßt, der in eine als Führung dienende Nut (9) des zu befestigenden Gerätes (1) eingreift.

4. Schnellbefestigungseinrichtung nach Anspruch 3, dadurch gekennzeichnet, daß der aus der Ebene des rahmenartigen Riegels (1) herausragende Ansatz (7) profiliert, z.B. im Querschnitt T- bzw. schwalbenschwanzförmig, ausgebildet ist und die Nut (9) des zu befestigenden Gerätes (1) mit einem Gegenprofil ausgebildet ist.

5. Schnellbefestigungseinrichtung nach einem der Ansprüche 1 bis 4, dadurch gekennzeichnet, daß die eine Schmalseite (6) des rahmenartigen Riegels (3) im Querschnitt im wesentlichen dreieckig ausgebildet und zum Hintergreifen der Tragschiene vorgesehen ist.

6. Schnellbefestigungseinrichtung nach einem der Ansprüche 1 bis 5, bei dem die Führungen des zu befestigenden Gerätes den rahmenartigen Riegel übergreifen, **dadurch gekennzeichnet**, daß die im Querschnitt dreieckige Schmalseite (6) des rahmenartigen Riegels (3) einen aus seiner Ebene herausragenden Anschlag (17) aufweist, der mit dem den Riegel (3) übergreifenden Abschnitt (2′) der Führung (2) zusammenwirkt und ein Herausziehen des Riegels (3) verhindert.

7. Schnellbefestigungseinrichtung nach einem der Ansprüche 1 bis 6, **dadurch gekennzeichnet**, daß der Riegel (3) in seiner einen Endstellung nur wenig über eine Kante (16) des zu befestigenden Gerätes (1) vorragt, wobei zwischen der Schmalseite (13) des Riegels (3) oder einer dazu parallel verlaufenden Strebe (14) und der Kante (16) des zu befestigenden Gerätes (1) nur ein schmaler, ein Einschieben eines Werkzeuges ermöglichender Spalt vorhanden ist.

## Claims

1. Rapid-fastening device for electrical appliances (1) for attachment to a mounting rail (20), in which a resilient bolt (3) is provided which is displaceable in a lateral guide of the appliance to be fastened, latch settings for the bolt being provided, which bolt exhibits a frame-like shape which is symmetrical about a longitudinal axis and the longitudinal sides of which bolt respectively exhibit at least one convex and one concave segment, characterized in that each longitudinal side of the frame-like bolt (3) exhibits at least three mutually adjoined segments (4, 5) running alternately convex-concave-convex, which can be latch-locked to the lateral guide (2) in, each in its own right, a first setting, the locking setting, a second setting, in which the appliance is loosely held, and a third setting, in which the appliance is released, and in that at least one further guide (9) for the frame-like bolt (3) is provided.

2. Rapid-fastening device according to Claim 1, characterized in that in the lateral guides (2) there are disposed concave widenings (12), preferably one widening respectively to each of the longitudinal sides, which widenings correspond to the convex segments (4) of the longitudinal sides of the bolt (3), and in that the concave segment (5) of the bolt (3) exhibits a length which corresponds to at least a part-length, preferably the entire length, of the lateral guides (2) of the appliance (1) to be fastened.

3. Rapid-fastening device according to Claim 1 or 2, characterized in that the further guide comprises through a [sic], on a narrow side (6) of the frame-like bolt (3), a protrusion (7) jutting out from the plane of the frame-like bolt (3), which protrusion engages in a groove (9), serving as a guide, in the appliance (1) to be fastened.

4. Rapid-fastening device according to Claim 3, characterized in that the protrusion (7) jutting out from the plane of the frame-like bolt (3) is of profiled configuration, e.g. of T-shaped or dovetail-shaped cross-section, and the groove (9) of the appliance (1) to be fastened is configured having a counter-profile.

5. Rapid-fastening device according to one of Claims 1 to 4, characterized in that the one narrow side (6) of the frame-like bolt (3) is of essentially triangular configuration in cross-section and is designed to back-grip the mounting rail.

6. Rapid-fastening device according to one of Claims 1 to 5, in which the guides of the appliance to be fastened overlap the frame-like bolt, characterized in that the narrow side (6), of triangular cross-section, of the frame-like bolt (3) exhibits a stop (17) jutting out from the plane of the said bolt, which stop interacts with that segment (2′) of the guide (2) overlapping the bolt (3) and prevents the bolt (3) from being withdrawn.

7. Rapid-fastening device according to one of Claims 1 to 6, characterized in that the bolt (3), in its one end setting, protrudes just a little over an edge (16) of the appliance (1) to be fastened, just a narrow gap being present between the narrow side (13) of the bolt (3), or a strut (14) running parallel thereto, and the edge (16) of the appliance (1) to be fastened, which gap allows the insertion of a tool.

## Revendications

1. Dispositif de fixation rapide d'appareils électriques (1) pour le montage de ceux-ci sur une barre support (20), dans lequel est prévu un verrou élastique (3) qui peut être déplacé dans un guidage latéral de l'appareil à fixer, des positions d'arrêt étant prévues pour ce verrou, qui a une forme du genre cadre symétrique par rapport à un axe longitudinal et dont les côtés longitudinaux présentent au moins une partie convexe et au moins une partie concave, caractérisé par le fait que chaque côté longitudinal du verrou du genre cadre (3) présente au moins trois parties se suivant, alternativement convexe-concave-convexe (4, 5) qui peuvent s'encliqueter séparément avec le guidage latéral (2), respectivement, dans une première position, la position de verrouillage, dans une deuxième position dans laquelle l'appareil est tenu de manière lâche, et dans une troisième position dans laquelle l'appareil est détaché, et qu'au moins un autre guidage (9) est prévu pour le verrou du genre cadre (3).

2. Dispositif de fixation rapide selon la revendication 1, caractérisé par le fait que, dans les guidages latéraux (2), sont faits des élargissements concaves (12), de préférence un élargissement sur chaque côté longitudinal, qui correspondent aux parties convexes (4) des côtés longitudinaux du verrou (3), et que la partie concave (5) du verrou (3) a une longueur qui correspond au moins à une partie de la longueur, et de préférence à la longueur totale, des guidages latéraux (2) de l'appareil à fixer (1).

3. Dispositif de fixation rapide selon l'une des revendications 1 et 2, caractérisé par le fait que l'autre guidage comprend un appendice (7) qui saille du plan du verrou du genre cadre (3) sur un petit côté (6) de ce dernier et s'engage dans une rainure servant de guidage (9) de l'appareil à fixer (1).

4. Dispositif de fixation rapide selon la revendication 3, caractérisé par le fait que l'appendice (7) saillant du plan du verrou du genre cadre (3) est profilé, par exemple a une section transversale en forme de T ou de queue d'aronde, et la rainure (9) de l'appareil à fixer (1) a un profil contraire.

5. Dispositif de fixation rapide selon l'une des revendications 1 à 4, caractérisé par le fait qu'un petit côté (6) du verrou du genre cadre (3) est de section transversale sensiblement triangulaire et prévu pour s'appliquer derrière la barre support.

6. Dispositif de fixation rapide selon l'une des revendications 1 à 5, dans lequel les guidages de l'appareil à fixer coiffent le verrou du genre cadre, caractérisé par le fait que le petit côté de section transversale triangulaire (6) du verrou du gendre cadre (3) présente une butée (17) saillant de son plan qui coopère avec la partie (2′) du guidage (2) coiffant le verrou (3) et empêche l'extraction du verrou (3).

7. Dispositif de fixation rapide selon l'une des revendications 1 à 6, caractérisé par le fait que le verrou (3), dans une position extrême, dépasse peu d'un bord (16) de l'appareil à fixer (1), entre le petit côté (13) du verrou (3) ou un contrefort (14) parallèle à celui-ci et le bord (16) de l'appareil à fixer (1) n'existant alors qu'un interstice étroit permettant l'insertion d'un outil.
